# EUROPÄISCHE PATENTSCHRIFT

(11) **EP 2 714 484 B1**
(45) Veröffentlichungstag und Bekanntmachung des Hinweises auf die Patenterteilung: **08.07.2015**
(21) Anmeldenummer: 12720422.0
(22) Anmeldetag: 08.05.2012
(51) Int. Cl.: B60W 30/16, B60W 30/14

(54) **VERFAHREN ZUM BETRIEB EINES LÄNGSFÜHRENDEN FAHRERASSISTENZSYSTEMS EINES KRAFTFAHRZEUGS UND KRAFTFAHRZEUG**
METHOD FOR OPERATING A LONGITUDINAL DRIVER ASSISTANCE SYSTEM OF A MOTOR VEHICLE AND MOTOR VEHICLE
PROCÉDÉ PERMETTANT LE FONCTIONNEMENT D'UN SYSTÈME D'AIDE À LA CONDUITE LONGITUDINALE D'UN VÉHICULE À MOTEUR ET VÉHICULE À MOTEUR

(30) Priorität: 25.05.2011 DE 102011102437
(43) Veröffentlichungstag der Anmeldung: 09.04.2014
(73) Patentinhaber: Audi AG, 85045 Ingolstadt (DE)
(72) Erfinder: SCHUBERTH, Stefan, 85057 Ingolstadt (DE); HELD, Ralf, 85072 Eichstätt (DE)
(74) Vertreter: Thielmann, Frank
(86) Internationale Anmeldenummer: PCT/EP2012/001966
(87) Internationale Veröffentlichungsnummer: WO 2012/159708

(56) Entgegenhaltungen:
- EP-A1- 2 287 060
- DE-A1-102009 007 885
- DE-A1-102010 032 086
- JP-A- 11 039 600

## Beschreibung

Die Erfindung betrifft ein Verfahren zum Betrieb eines längsführenden Fahrerassistenzsystems eines Kraftfahrzeugs, welches in einem reinen Folgebetrieb die Geschwindigkeit des Kraftfahrzeugs so regelt, dass ein Abstand zu einem voranfahrenden Fahrzeug als Regelobjekt konstant bleibt, und welches in einem Freifahrbetrieb auf eine Wunschgeschwindigkeit regelt, wobei eine Ausscherwahrscheinlichkeit des voranfahrenden Fahrzeugs in Abhängigkeit von Sensordaten wenigstens eines Umfeldsensors ermittelt wird, sowie ein Kraftfahrzeug mit einem solchen Fahrerassistenzsystem.

Derartige längsführende Fahrerassistenzsysteme sind im Stand der Technik bereits weithin bekannt. Sie regeln den Betrieb des Kraftfahrzeugs durch automatische Brems- oder Beschleunigungseingriffe zumindest teilweise automatisch. Ein einfaches längsführendes Fahrerassistenzsystem ist die sogenannte Geschwindigkeitsregelanlage (GRA), oft auch Tempomat genannt. Dabei kann fahrerseitig eine Wunschgeschwindigkeit eingestellt werden, die dann automatisch durch das Fahrerassistenzsystem möglichst genau eingehalten wird.

In Erweiterung dieser Grundidee wurden längsführende Fahrerassistenzsysteme vorgeschlagen, die einen sogenannten Folgeregler aufweisen und häufig auch als ACC-Systeme (Adaptive Cruise Control) bezeichnet werden. Dabei wird nicht nur in einem Freifahrbetrieb auf die Wunschgeschwindigkeit des Fahrers geregelt, sondern es wird zusätzlich überwacht, ob ein voranfahrendes Fahrzeug vorliegt. Ist dies insbesondere innerhalb eines gegebenenfalls ebenso durch den Fahrer einstellbaren Regelabstands, häufig einer Zeitlücke, der Fall, so wird in einen reinen Folgebetrieb gewechselt, in dem die Geschwindigkeit des Kraftfahrzeugs so angepasst wird, dass der Abstand zu dem voranfahrenden Fahrzeug dem Regelabstand entspricht. Das voranfahrende Fahrzeug, auf das geregelt wird, kann auch als Regelobjekt bezeichnet werden.

Das Regelobjekt kann beispielsweise in einem sogenannten Plausibilisierungsverfahren ermittelt werden. Dabei werden dem Kraftfahrzeug voranfahrende Objekte ermittelt und anhand von Kriterien bewertet. Beispielsweise ist es bekannt, einen Fahrschlauch, der einer wahrscheinlichsten künftigen Trajektorie des Kraftfahrzeugs entspricht, zu ermitteln und alle außerhalb des Fahrschlauchs liegenden Objekte von der Betrachtung auszuschließen, wobei dann häufig das in Fahrtrichtung des Kraftfahrzeugs entlang des Fahrschlauchs nächste Objekt als Regelobjekt ausgewählt wird. Der umgekehrte Vorgang, also der Verlust des Regelobjekts und mithin das Beenden des Folgebetriebs, wird häufig als Deplausibilisierung des Regelobjekts bezeichnet, da seine Plausibilität als Regelobjekt beispielsweise unter einen Schwellwert fällt oder, sei es durch Spurwechsel oder auch durch einen Messfehler, das Objekt gar nicht mehr detektiert wird.

Zur Deplausibilisierung eines aus der eigenen Fahrspur ausscherenden voranfahrenden Fahrzeugs tritt aktuell ein Verlust des Regelobjekts dann auf, wenn das voranfahrende Fahrzeug den Fahrschlauch verlässt. Erst zu diesem Zeitpunkt wird möglichst komfortabel wieder auf die Wunschgeschwindigkeit beschleunigt, nachdem in den Freifahrbetrieb übergegangen wird. Dabei ergibt sich jedoch folgende Problematik. Fährt man hinter einem ein anderes Fahrzeug überholenden voranfahrenden Fahrzeug als Regelobjekt und man nähert sich einer Lücke, in der das überholende voranfahrende Fahrzeug dem eigenen Kraftfahrzeug die Möglichkeit zum Überholen gibt, ist die eigene Beschleunigung meist so spät und so träge, dass die Lücke des anderen Fahrzeugs, des ehemaligen Regelobjekts, wieder zu klein geworden ist, so dass der Fahrer dieses Kraftfahrzeugs wiederum die Fahrspur wechselt und das eigene Kraftfahrzeug, da der Abstand geringer geworden ist, sich durch einen Bremsvorgang zur Herstellung des Regelabstands deutlich abstößt und somit nach dem nächsten Überholvorgang bei der nächsten Lücke noch länger benötigt, um in die Beschleunigung überzugehen. Dieser Effekt kann sich wiederholen, bis eine längere Lücke vorhanden ist, die auch bei der verzögerten Beschleunigung ausreichend ist, dass man das ehemalige Regelobjekt überholen kann. Dies entspricht in keinster Weise der Erwartung des Fahrers, nachdem diesem aus seiner Erfahrung leichter möglich ist, ein vor ihm fahrendes Fahrzeug als Ausscherer zu erkennen, woraufhin er deutlich früher beschleunigen kann, selbst wenn das voranfahrende Fahrzeug noch auf der eigenen Spur ist.

EP 2 287 060 A1 betrifft ein gattungsgemäßes Verfahren zur Ermittlung eines Ein- oder Ausschervorgangs eines dem eigenen Kraftfahrzeug vorausfahrenden Fahrzeugs. Es wird dargelegt, dass einer der hauptsächlichen Gründe für zu spät bemerkte Ein- und Ausschervorgänge Unsicherheiten bei der genauen Spurzuordnung der Objekte zur eigenen Fahrspur seien, hier also dem virtuellen Fahrschlauch. Entsprechend wird dort vorgeschlagen, eine reine Winkelbetrachtung aufgrund eines Bildes vorzunehmen, ohne dass hierbei der reale Abstand des vorausfahrenden Fahrzeugs zum eigenen Fahrzeug eine Rolle spielt, wobei allein aufgrund dieser Winkelbetrachtung genauestens auf die Bewegung des Fahrzeugs wie auch seine Bewegungsrichtung geschlossen werden können soll. Dies alles ist im Kontext mit Längsführungssystemen, insbesondere ACC-Systemen, diskutiert, wobei die Ermittlungsergebnisse der nachfolgenden Steuerung des Längsführungssystems, beispielsweise beim "Loslassen" eines ausscherenden Fahrzeugs als Führungsfahrzeug, zugrunde liegen.

DE 10 2009 997 885 A1 betrifft ein Verfahren zur Erkennung von auf die eigene Fahrspur einscherenden oder aus der eigenen Fahrspur ausscherenden Fahrzeugen. Dort wird allgemein darauf hingewiesen, dass die Bewertung zum möglichen Spurwechsel zur weiteren Verarbeitung durch beispielsweise ein Abstandswarn- oder Abstandsregelsystem ausgegeben werden kann.

Der Erfindung liegt daher die Aufgabe zugrunde, ein Betriebsverfahren für ein längsführendes Fahrerassistenzsystem, insbesondere ein ACC-System, so zu verbessern, dass auf Ausscherer besser reagiert wird und insbesondere ein erfolgreicher Überholvorgang wahrscheinlicher wird.

Zur Lösung dieser Aufgabe ist bei einem Verfahren der eingangs genannten Art erfindungsgemäß vorgesehen, dass wobei die Regelung auf das voranfahrende Fahrzeug und/oder die Regelung im Freifahrbetrieb unmittelbar nach der Beendigung des Folgebetriebs in Abhängigkeit von der Ausscherwahrscheinlichkeit modifiziert wird, indem bei einer einen Vorbereitungsschwellwert überschreitenden Ausscherwahrscheinlichkeit und einer Geschwindigkeit des voranfahrenden Fahrzeugs, die niedriger als die Wunschgeschwindigkeit ist, ein Regelabstand zu dem voranfahrenden Fahrzeug verkleinert wird und/oder zu einer von dem Fahrerassistenzsystem im Folgebetrieb ermittelten Beschleunigungsanforderung ein positiver Beschleunigungswert addiert wird, oder in Abhängigkeit von der Ausscherwahrscheinlichkeit der Folgebetrieb beendet wird, wobei bei einer einen Situationsschwellwert überschreitenden Ausscherwahrscheinlichkeit bei Beendigung des Folgebetriebs schneller von Bremse auf Antrieb gewechselt und/oder eine höhere Beschleunigung angefordert wird als bei einer sonstigen Objektdeplausibilisierung..

Das eigene Kraftfahrzeug, konkret das Fahrerassistenzsystem, führt also eine vorgezogene Reglerreaktion auf Ausscherer im Nahbereich durch. Das Fahrerassistenzsystem, insbesondere das ACC-System, ermittelt für ein vorausfahrendes Fahrzeug eine Ausscherwahrscheinlichkeit und reagiert abhängig von dieser Größe auf das eigentlich noch als Regelobjekt klassifizierte Fahrzeug. Auf diese Weise wird die Zufriedenheit des Anwenders des Fahrerassistenzsystems erhöht, denn es ist eine schnellere und dynamischere Reaktion auf ausscherende Fahrzeuge möglich, die sich in ihren technischen Maßnahmen an dem Verhalten des Fahrers orientiert, das bedeutet, es erfolgt eine erwartete Reaktion, die es insbesondere ermöglicht, einen Überholvorgang durchzuführen, wenn das voranfahrende Fahrzeug "Platz macht".

Dabei sei an dieser Stelle noch angemerkt, dass das erfindungsgemäße Verfahren selbstverständlich in allen Ausführungsformen automatisch abläuft, wobei es insbesondere durch die Steuereinrichtung eines Fahrerassistenzsystems durchgeführt werden kann, wo es durch entsprechende Software- und/oder Elektronikkomponenten realisiert ist.

Wie bereits erwähnt, betrifft das erfindungsgemäße Verfahren den Fall, in dem das voranfahrende Fahrzeug eigentlich noch als Regelobjekt im Folgebetrieb plausibilisiert ist, wobei es mehrere Möglichkeiten zur konkreten Reaktion gibt.

So kann vorgesehen sein, dass bei einer einen Deplausibilisierungsschwellwert überschreitenden Ausscherwahrscheinlichkeit der Folgebetrieb unmittelbar beendet wird. Liegt eine sehr hohe bis sichere Ausscherwahrscheinlichkeit vor, so kann folglich das voranfahrende Regelobjekt direkt deplausibilisiert werden. Dabei kann der Deplausibilisierungsschwellwert insbesondere 70 - 95 %, bevorzugt 80 %, betragen. Es ist sinnvoll, hier eine hohe Wahrscheinlichkeit anzusetzen, nachdem ein fehlerhaftes Ende des Folgebetriebs, mithin eine fehlerhafte Deplausibilisierung, eine sehr unkomfortable Beschleunigung auf das voranfahrende Fahrzeug ausüben kann, die einen Fahrereingriff notwendig machen kann. Nichtsdestotrotz ist es in dieser Ausgestaltung möglich, selbst bei einem breiten Fahrschlauch, der noch keine Veranlassung zu einer Deplausibilisierung unter Verwendung der üblichen Algorithmen gibt, unabhängig davon bei einer hohen Ausscherwahrscheinlichkeit dennoch zu deplausibilisieren, um ein dynamisches Reagieren auf das Ausscheren zu ermöglichen.

In einer ersten Ausgestaltung ist vorgesehen, dass bei einer einen Vorbereitungsschwellwert überschreitenden Ausscherwahrscheinlichkeit und einer Geschwindigkeit des voranfahrenden Fahrzeugs, die niedriger als die Wunschgeschwindigkeit ist, ein Regelabstand zu dem voranfahrenden Fahrzeug verkleinert wird und/oder zu einer von dem Fahrerassistenzsystem im Folgebetrieb ermittelten Beschleunigungsanforderung ein positiver Beschleunigungswert addiert wird. Ein derartiger Vorbereitungsschwellwert, der letztlich angibt, ab wann die Ausscher-Zusatzfunktion der vorliegenden Erfindung aktiv wird, kann beispielsweise 40 - 60 % betragen, bevorzugt 50 %. Auf eine geringere, aber immer noch relativ sichere Ausscherwahrscheinlichkeit kann mithin eine vorgezogene Reglerreaktion durchgeführt werden. Es wird also tatsächlich der Folgebetrieb im Hinblick auf ein bevorstehendes Ausscheren modifiziert, so dass eine schnellere Reaktion auf Ausscherer unterstützt wird. Hierbei kann der Abstand zum Regelobjekt verkleinert werden oder zur Beschleunigungs- bzw. Momentenanforderung an Motor oder Bremssystem ein Wert aufaddiert werden, wobei konkret vorgesehen sein kann, dass die Verkleinerung des Regelabstands und/oder der Beschleunigungswert abhängig von dem aktuellen Abstand zu dem voranfahrenden Fahrzeug und/oder der Ausscherwahrscheinlichkeit gewählt wird. Mithin kann also bei einer hohen Ausscherwahrscheinlichkeit stärker reagiert werden als bei einer eher kleinen Ausscherwahrscheinlichkeit. Dabei kann zusätzlich der aktuelle Abstand zu dem Regelobjekt berücksichtigt werden, nachdem selbstverständlich grundsätzlich sicherzustellen ist, dass Kollisionen vermieden werden.

In einer zweiten Ausgestaltung der vorliegenden Erfindung ist vorgesehen, dass bei einer einen Situationsschwellwert überschreitenden Ausscherwahrscheinlichkeit bei Beendigung des Folgebetriebs ein schnellerer Wechsel auf einen Beschleunigungsbetrieb des Kraftfahrzeugs angefordert wird und/oder die Beschleunigungsanforderung erhöht wird. Liegt also dann tatsächlich eine Deplausibilisierung vor und ist gleichzeitig eine den Situationsschwellwert, der beispielsweise 40 - 60 %, bevorzugt 50 %, betragen kann, überschreitende Ausscherwahrscheinlichkeit gegeben, so kann bei einer Objektdeplausibilisierung schneller von Bremse auf Antrieb gewechselt und/oder eine höhere Beschleunigung angefordert werden als bei einer sonstigen Objektdeplausibilisierung, die beispielsweise auch durch einen Fehler, beispielsweise einen Sensorfehler, auftreten kann. Hier wird also das Wissen ausgenutzt, dass es recht wahrscheinlich ist, dass das Objekt deswegen deplausibilisiert wurde, da es ausschert. Dabei kann also, um einen möglichst schnellen Überholvorgang zu ermöglichen, beispielsweise eine höhere Beschleunigung angefordert werden, indem von einem grundsätzlich genutzten "Komfortmaß", also einer maximalen, aus Komfortgründen gewählten Beschleunigung, weg zu höheren Beschleunigungen gewechselt wird. Möglich ist es auch, die Geschwindigkeit, mit der sich die Beschleunigung ändert, zu wechseln, das bedeutet, stärkere Gradienten zu wählen und dergleichen. Auf diese Weise ist eine dynamischere Reaktion nach der Deplausibilisierung möglich, die sich an der tatsächlich vorhandenen Situation orientiert. Dabei sei an dieser Stelle auch angemerkt, dass zusätzlich weitere Kriterien vorgesehen sein können, um eine derartige geänderte Reaktion auf eine Deplausibilisierung tatsächlich zu ermöglichen, beispielsweise ein Kriterium, dass sich an der Länge einer auf der Spur, auf die der Ausscherer wechselt, vorhandenen Lücke orientiert oder dergleichen.

Zur tatsächlichen Ermittlung der Ausscherwahrscheinlichkeit können ein oder mehr Algorithmen, die die Sensordaten verarbeiten, eingesetzt werden, wobei bei der Verwendung mehrerer unterschiedlicher Algorithmen verschiedene Möglichkeiten denkbar sind, um eine endgültige Ausscherwahrscheinlichkeit zu bestimmen. So ist es zum einen denkbar, dass die verschiedenen Algorithmen jeweils einen Beitrag zur Ausscherwahrscheinlichkeit liefern und sich die Gesamtausscherwahrscheinlichkeit letztlich als eine Summe dieser Beiträge ergibt. Möglich ist es jedoch auch, eine Logik zu verwenden, die die ausgegebenen Ausscherwahrscheinlichkeiten der einzelnen Algorithmen zu einer gesamten Ausscherwahrscheinlichkeit verknüpft, beispielsweise diese gemittelt oder gewichtet betrachtet. Im Folgenden sollen nun Möglichkeiten zur Bestimmung einer Ausscherwahrscheinlichkeit diskutiert werden, die im erfindungsgemäßen Verfahren vorteilhaft allein oder gemeinsam realisiert werden können.

So kann in besonders vorteilhafter Ausgestaltung der vorliegenden Erfindung vorgesehen sein, dass zur Bestimmung der Ausscherwahrscheinlichkeit eine Situationsanalyse durchgeführt wird, insbesondere bezüglich eines Überholvorgangs des voranfahrenden Fahrzeugs und/oder eines ohne eine Motivation auf der linken Fahrspur bei Rechtsverkehr oder einer rechten Fahrspur bei Linksverkehr voranfahrenden Fahrzeugs. Es können also insbesondere Situationen detektiert werden, bei denen man sich einem voranfahrenden Fahrzeug nähert oder diesem bereits folgt, das entweder einen weiteren Verkehrsteilnehmer gerade überholt oder unmotiviert auf einer äußeren Spur fährt, wobei sich vor dem voranfahrenden Fahrzeug kein weiterer Verkehrsteilnehmer befindet. Befindet sich nämlich ferner auf der rechten Spur bei Rechtsverkehr bzw. auf der linken Spur bei Linksverkehr kein weiterer Verkehrsteilnehmer und/oder der Überholvorgang ist deutlich vorüber bzw. war das Regelobjekt unmotiviert auf der aktuell befahrenen Fahrspur des Kraftfahrzeugs, so ist es wahrscheinlich, dass das Regelobjekt nach rechts bei Rechtsverkehr bzw. nach links bei Linksverkehr ausschert. Um derartige Betrachtungen anzustellen, kann zweckmäßigerweise vorgesehen sein, dass für die Situationsanalyse Spurdaten über die aktuell von dem Kraftfahrzeug befahrene Fahrspur und die Gesamtzahl von Fahrspuren der befahrenen Straße und/oder Verkehrsteilnehmerdaten, insbesondere eine Fahrspur und/oder eine Geschwindigkeit und/oder eine Position, bezüglich weiterer voranfahrender Verkehrsteilnehmer ermittelt werden. Hierzu können beispielsweise die Daten von Radarsensoren und/oder einer Kamera als Umfeldsensoren eingesetzt werden, wobei beispielsweise dieselbe Grundlage verwendet werden kann, die bereits zur Plausibilisierung eines Regelobjekts eingesetzt wird, nachdem in diesem Zusammenhang auch im Vorfeld des Kraftfahrzeugs befindliche, voranfahrende Objekte detektiert und klassifiziert werden. Voraussetzung hierfür ist nur, dass ein Sensor, insbesondere ein Radarsensor, vorgesehen ist, der vor einem detektierten Objekt ein weiteres Objekt detektieren kann, beispielsweise über Radarstrahlung, die unter dem direkt voranfahrenden Fahrzeug durchdringen und das vorausfahrende Fahrzeug detektieren kann. Heutige Radarsensoren und auswertende Fahrzeugsysteme sind dazu üblicherweise bereits in der Lage. Mithin wird dann durch das Wissen um andere Verkehrsteilnehmer als detektierte Objekte sowie deren Eigenschaften, also die Verkehrsteilnehmerdaten, eine Situationsanalyse ermöglicht, indem insbesondere die eigene Fahrspur und/oder die rechts benachbarte Fahrspur bei Rechtsverkehr bzw. die links benachbarte Fahrspur bei Linksverkehr betrachtet werden. Um diese Spurzuordnung zu betrachten, muss es wenigstens möglich sein, eine weitere Fahrspur auf der rechten Seite bei Rechtsverkehr bzw. auf der linken Seite bei Linksverkehr festzustellen, was beispielsweise über eine Aussage über die eigene Fahrspur und die Straße, also Spurdaten, möglich ist, jedoch ist auch die Tatsache, dass ein detektiertes Objekt gerade überholt wird bzw. wurde, ein deutlicher Hinweis auf das Vorliegen einer solchen Spur. Eine derartige Situationsanalyse ermöglicht also ein besonders vorausschauendes Regeln, nachdem Situationen, in denen ein Ausscheren des Regelobjekts wahrscheinlich ist, gezielt und vorausschauend erkannt werden können und eine entsprechende Reaktion erfolgen kann. Dabei kann insbesondere vorgesehen sein, dass die Ausscherwahrscheinlichkeit erhöht und/oder auf einen festen Wert hochgesetzt wird, wenn die Situationsanalyse insbesondere durch Betrachtung eines Verlaufs der Position des voranfahrenden Kraftfahrzeugs und wenigstens eines weiteren, überholten oder zu überholenden Verkehrsteilnehmer, ergibt, dass das voranfahrende Fahrzeug den Überholvorgang abgeschlossen hat und bei Rechtsverkehr auf die rechte Fahrspur einscheren kann oder bei Linksverkehr auf die linke Fahrspur einscheren kann, und/oder wenn die Situationsanalyse ergibt, dass das vorausfahrende Fahrzeug trotz einer leeren rechten Fahrspur bei Rechtsverkehr oder einer leeren linken Fahrspur bei Linksverkehr auf der Fahrspur des Kraftfahrzeugs fährt. Beispielsweise kann vorgesehen sein, dass dann eine definierte Ausscherwahrscheinlichkeit bzw. ein bestimmter definierter Wert, um den die Ausscherwahrscheinlichkeit erhöht wird, vorgesehen ist, beispielsweise ein Wert von 50 %. In zweckmäßiger Weiterbildung dieser Situationsanalyse kann ferner vorgesehen sein, dass bei einem trotz einer leeren rechten Fahrspur bei Rechtsverkehr oder einer leeren linken Fahrspur bei Linksverkehr auf der Fahrspur des Kraftfahrzeugs fahrend detektierten voranfahrenden Fahrzeug die Erhöhung oder Hochsetzung der Ausscherwahrscheinlichkeit nur für eine bestimmte Zeitspanne, insbesondere 2 bis 4 Sekunden, bevorzugt 3 Sekunden, erfolgt und dann, insbesondere über eine Rampe, abgebaut wird. Auf diese Weise ist es vorteilhaft möglich, Fehlreaktionen auf notorische Linksfahrer bei Rechtsverkehr bzw. notorische Rechtsfahrer bei Linksverkehr zu vermeiden oder auf Fahrer, die nach einem Überholvorgang nicht die Fahrspur wechseln. Mithin kann die Ausscherwahrscheinlichkeit bzw. der Wert für eine definierte Zeit, beispielsweise 3 Sekunden, konstant gehalten und dann über eine Rampe abgebaut werden.

In einer weiteren Möglichkeit zur Bestimmung einer Ausscherwahrscheinlichkeit und/oder eines Beitrags zu einer Ausscherwahrscheinlichkeit kann vorgesehen sein, dass die Ausscherwahrscheinlichkeit unter Berücksichtigung einer Überdeckung zwischen der befahrenen Fahrspur und dem voranfahrenden Fahrzeug bestimmt wird. Ist das vorausfahrende Fahrzeug komplett in der eigenen Fahrspur, die von den Fahrspurmarkierungen begrenzt wird, so kann man davon ausgehen, dass die Ausscherwahrscheinlichkeit aufgrund dieses Merkmals sehr gering ist. Wandert das Objekt in Richtung der Fahrspurmarkierung und fährt über diese, so kann man von einer höheren Ausscherwahrscheinlichkeit ausgehen. Dies ist die grundsätzliche Idee dieses Ansatzes, wobei zur konkreten Realisierung vorgesehen sein kann, dass zur Ermittlung der Überdeckung die Winkel von einem das Objekt vermessenden Sensor zu den beiden hinteren äußeren Kanten des voranfahrenden Fahrzeugs mit dem Winkel zu einer insbesondere in einem Bild einer Kamera in einem dem Abstand der Kanten entsprechenden Abstand befindlichen Fahrspurmarkierung verglichen werden. Physikalisch lässt sich die Überdeckung also über die Objektkantenwinkel und einen Winkel von der relevanten Fahrspurmarkierung zu der entgegengesetzten Objektkante, die beispielsweise von einer Videokamera vermessen werden kann, berechnen. Schert ein Fahrzeug vor dem eigenen Kraftfahrzeug nach rechts bei Rechtsverkehr bzw. links bei Linksverkehr aus, so nähert sich die linke bzw. rechte Objektkante der rechten bzw. linken Fahrspurmarkierung. Diese Annäherung muss messbar sein, um eine Ausscherwahrscheinlichkeit zu berechnen. Über die Winkel kann eine prozentuale Überdeckung zwischen dem voranfahrenden Fahrzeug, also dem Regelobjekt, und der eigenen Fahrspur berechnet werden. Hierzu wird im Beispiel des Rechtsverkehrs der Winkel von der linken Objektkante zur rechten Linie durch den Differenzwinkel aus den beiden Objektkantenwinkeln berechnet. Eine so oder anderweitig ermittelte Überdeckung kann die Ausscherwahrscheinlichkeit beeinflussen, wobei in einer zweckmäßigen Ausgestaltung der vorliegenden Erfindung die Abbildung der Überdeckung auf die Ausscherwahrscheinlichkeit und/oder eine Erhöhung der Ausscherwahrscheinlichkeit wenigstens teilsweise linear verläuft, wobei die Ausscherwahrscheinlichkeit mit abnehmender Überdeckung ansteigt. Die Ausscherwahrscheinlichkeit kann mithin als linear fallende Kennlinie über der Überdeckung angenommen werden.

In einer weiteren Möglichkeit eines Algorithmus zur Ermittlung einer Ausscherwahrscheinlichkeit kann vorgesehen sein, dass eine Quergeschwindigkeit des voranfahrenden Fahrzeugs gemessen wird, woraus eine Position, insbesondere Querposition, des voranfahrenden Fahrzeugs nach einer vorbestimmten Zeitdauer, insbesondere 2 bis 4 Sekunden, prädiziert wird und die Ausscherwahrscheinlichkeit unter Berücksichtigung der prädizierten Position ermittelt wird. Ist also das vorausfahrende Fahrzeug insbesondere noch im Fahrschlauch enthalten, so kann über eine Prädiktion über die Quergeschwindigkeit mittels einer geeigneten vorbestimmten Zeitdauer, beispielsweise einige Sekunden, das Objekt weiter nach außen gesetzt werden. Man erkennt also, ob sich das voranfahrende Fahrzeug, also das Regelobjekt, so bewegt, dass dies einen Ausschervorgang nahe legt. Geht man dabei von einem grundsätzlich mit einem Fahrschlauch zur Plausibilisierung arbeitenden Fahrerassistenzsystem aus, wird also zur Ermittlung des Regelobjekts ein Plausibilitätswert für ein detektiertes vorausfahrendes Objekt anhand eines Fahrschlauchs bestimmt, kann in vorteilhafter Ausgestaltung der vorliegenden Erfindung vorgesehen sein, dass die Ausscherwahrscheinlichkeit unter Berücksichtigung eines Plausibilitätswertes bezüglich der prädizierten Position bestimmt wird, insbesondere bei einem eine Wahrscheinlichkeit angebenden Plausibilitätswert als Eins minus den Plausibilitätswert. Es kann unter Verwendung des ohnehin berechneten Fahrschlauchs eine neue Objektplausibilität für die prädizierte Position berechnet werden, wobei als Ausscherwahrscheinlichkeit letztlich das Gegenteil der Plausibilität für die prädizierte Position angenommen werden kann.

In Weiterbildung der Erfindung kann vorgesehen sein, dass bei Überschreitung eines Vorkonditionierungsschwellwerts für die Ausscherwahrscheinlichkeit die Betriebsparameter wenigstens eines weiteren Fahrzeugsystems im Hinblick auf eine schnellere Beschleunigung des Kraftfahrzeugs bei Beendigung des Folgebetriebs angepasst werden. Es liegt also auch im Rahmen der Erfindung, zusätzlich eine Vorkonditionierung verschiedener relevanter Fahrzeugsysteme, beispielsweise des Motors, eines ESP-Systems oder dergleichen, vorzunehmen, um eine schnellere und dynamischere Reaktion auf ein Ausscheren zu ermöglichen.

Neben dem Verfahren betrifft die Erfindung auch ein Kraftfahrzeug, umfassend ein längsführendes Fahrerassistenzsystem mit einer zur Durchführung des erfindungsgemäßen Verfahrens ausgebildeten Steuereinrichtung. Sämtliche Ausführungen bezüglich des erfindungsgemäßen Verfahrens lassen sich analog auf das erfindungsgemäße Kraftfahrzeug übertragen, so dass auch mit diesem die bereits beschriebenen Vorteile erreicht werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: ein Ablaufplan zur Durchführung des erfindungsgemäßen Verfahrens,
- Fig. 3: eine Skizze zur Ermittlung einer Überdeckung,
- Fig. 4: die Abhängigkeit einer Ausscherwahrscheinlichkeit von der Überdeckung,
- Fig. 5: eine Skizze zur Ermittlung einer prädizierten Position,
- Fig. 6: eine Skizze möglicher zu analysierender Verkehrssituationen, und
- Fig. 7: ein zeitlicher Verlauf einer Ausscherwahrscheinlichkeit.

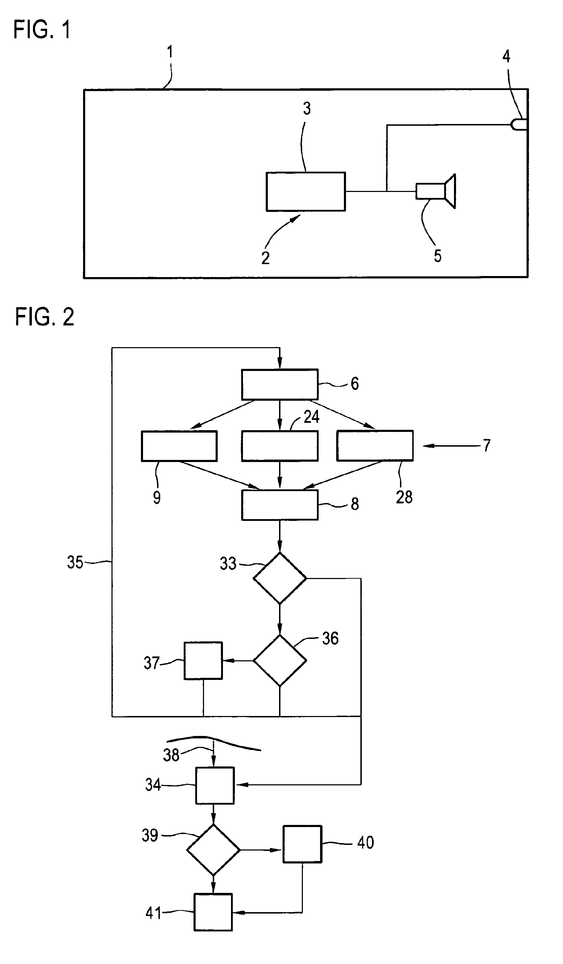

Fig. 1 zeigt eine Prinzipskizze eines erfindungsgemäßen Kraftfahrzeugs 1. Es umfasst ein längsführendes Fahrerassistenzsystem 2, welches hier als ACC-System ausgebildet ist und in einem Freifahrmodus auf eine Wunschgeschwindigkeit regelt sowie in einem reinen Folgebetrieb auf einen voreingestellten oder vom Fahrer gewählten Regelabstand auf ein voranfahrendes Fahrzeug als Regelobjekt regelt. Der Betrieb des Fahrerassistenzsystems 2 wird durch eine Steuereinrichtung 3 geregelt, die auch zur Durchführung des erfindungsgemäßen Verfahrens ausgebildet ist. Die Ausgabe des erfindungsgemäßen Fahrerassistenzsystems 2 ist eine Beschleunigungsanforderung, die selbstverständlich auch negativ sein kann und der entsprechend der Motor und das Bremssystem des Kraftfahrzeugs 1 angesteuert werden.

Die Grundfunktion eines ACC-Systems im Hinblick auf den Folgebetrieb und den Freifahrbetrieb muss hier nicht näher dargestellt werden, nachdem dies im Stand der Technik bereits ausführlich bekannt ist. Im Rahmen des erfindungsgemäßen Verfahrens ist die Steuereinrichtung 3 jedoch auch ausgebildet, eine Ausscherwahrscheinlichkeit für ein voranfahrendes Fahrzeug zu ermitteln, wofür Sensordaten von Umfeldsensoren berücksichtigt werden. Vorliegend sind beispielhaft ein Radarsensor 4 und eine Kamera 5 dargestellt.

Fig. 2 zeigt einen Ablaufplan eines Ausführungsbeispiels des erfindungsgemäßen Verfahrens. Dabei werden in einem Schritt 6 die Sensordaten der Sensoren, insbesondere der Radarsensoren 4 und der Kamera 5, empfangen. Diese werden dann in parallel einen Beitrag zu der Ausscherwahrscheinlichkeit ermittelnden Algorithmen 7 eingesetzt. Das bedeutet, im vorliegenden Ausführungsbeispiel ermittelt letztlich jeder der Algorithmen 7 eine Teil-Ausscherwahrscheinlichkeit, wobei die einzelnen Ausscherwahrscheinlichkeiten vorliegend durch Addition in einem Schritt 8 zu einer Gesamtausscherwahrscheinlichkeit zusammengefasst werden. Selbstverständlich sind auch andere Logiken denkbar, um verschiedene Teil-Ausscherwahrscheinlichkeiten zu verknüpfen.

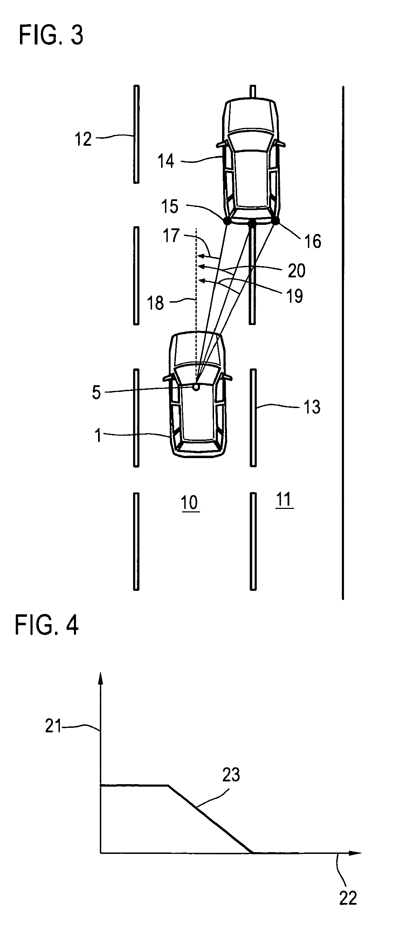

Bezüglich eines ersten Algorithmus 7 wird in einem Schritt 9 die Überdeckung des Regelobjekts mit der aktuellen Fahrspur des eigenen Kraftfahrzeugs 1 zur Ermittlung der Ausscherwahrscheinlichkeit berücksichtigt. Dabei wird zunächst festgestellt, auf welcher Fahrspur sich das Kraftfahrzeug 1 befindet und ob überhaupt eine benachbarte Spur existiert, auf die das voranfahrende Kraftfahrzeug ausscheren könnte, bei Rechtsverkehr also eine rechte Spur. Hierzu können Daten der Kamera 5 in Betracht gezogen werden, jedoch auch Daten eines in Fig. 1 nicht näher gestellten Navigationssystems sowie sonstige Umfelddaten, beispielsweise die Tatsache, dass gerade ein Kraftfahrzeug überholt wird oder überholt wurde. Das Vorgehen zur Ermittlung der Überdeckung wird durch Fig. 3 näher erläutert, die das Kraftfahrzeug 1 mit dem Radarsensor 4 auf der eigenen Fahrspur 10 zeigt. Es wurde bereits ermittelt, dass eine benachbarte Fahrspur 11 existiert. Die eigene Fahrspur 10 wird durch Fahrspurmarkierungen 12 und 13 begrenzt, die in den Bildern der Kamera 5 detektiert werden können. Beispielsweise über eine Lidarsensorik oder die Kamera 5 ist es ferner möglich, das voranfahrende Fahrzeug 14 zu detektieren, hier insbesondere seine beiden lateralen rückseitigen Kanten 15, 16. Ein Winkel 17 beschreibt die Lage der Kante 15 gegenüber der Fahrtrichtung 18. Ein Winkel 19 beschreibt die Lage der Kante 16 gegenüber der Fahrtrichtung 18. Sind diese beiden Winkel 17, 19 bekannt, beispielsweise aus Daten der Kamera 5 oder eines Lidarsensors, so ergibt ihre Differenz ein Maß für die Breite des Fahrzeugs 14. Aus den Videodaten (Sensordaten) der Kamera 5 kann nun ein weiterer Winkel 20 bestimmt werden, der die Lage der rechten Fahrspurmarkierung 13 wiedergibt. Möglich ist es jedoch auch, direkt aus dem Bild der Kamera 5 bzw. aus den Strahlwinkeln eines Lidarsensors den Winkel zu berechnen, der der Differenz der Winkel 17 und 20 entspricht.

Ist der Winkel 19 größer als der Winkel 20, der Winkel 17 aber kleiner als der Winkel 20, so liegt eine teilweise Überdeckung zwischen der Fahrspur 10 und dem Fahrzeug 14 vor. Diese kann prozentual berechnet werden, indem der Differenzwinkel des Winkels 17 der linken Kante 15 und des Winkels 20 der Fahrspurmarkierung 13 durch den Differenzwinkel aus den beiden Kantenwinkeln 17 und 19 geteilt wird.

Die Bestimmung der Ausscherwahrscheinlichkeit aus der Überdeckung wird durch Fig. 4 näher dargestellt. Dabei wird auf einer Achse 21 die Ausscherwahrscheinlichkeit gegen die Überdeckung auf einer Achse 22 dargestellt. Ersichtlich wird die Teil-Ausscherwahrscheinlichkeit als linear fallende Kennlinie 23 über der Überdeckung angenommen. Dabei ist die von diesem Algorithmus 7 gelieferte Ausscherwahrscheinlichkeit Null, wenn sich das vorausfahrende Kraftfahrzeug vollständig auf der Fahrspur 10 befindet und steigt dann linear bis auf einen Maximalwert an.

Es sei an dieser Stelle angemerkt, dass statt der Verwendung der Überdeckung auch Ausführungsbeispiele denkbar sind, in denen die Annäherung an die Fahrspurmarkierung 13, also letztlich die Differenz der Winkel 19 und 20, unmittelbar betrachtet wird, um hieran eine Ausscherwahrscheinlichkeit festzumachen. Ferner sei angemerkt, dass, da das beschriebene Berechnungsverfahren auch Überdeckungen von über 100 % erlaubt, wenn sich das Fahrzeug 14 von der Fahrspurmarkierung 13 beabstandet vollständig innerhalb der Fahrspur 10 befindet, auch festgelegt werden kann, dass die Ausscherwahrscheinlichkeit bereits bei noch vollständig auf der Fahrspur 10 befindlichem Fahrzeug 14 einen von Null verschiedenen Wert annimmt.

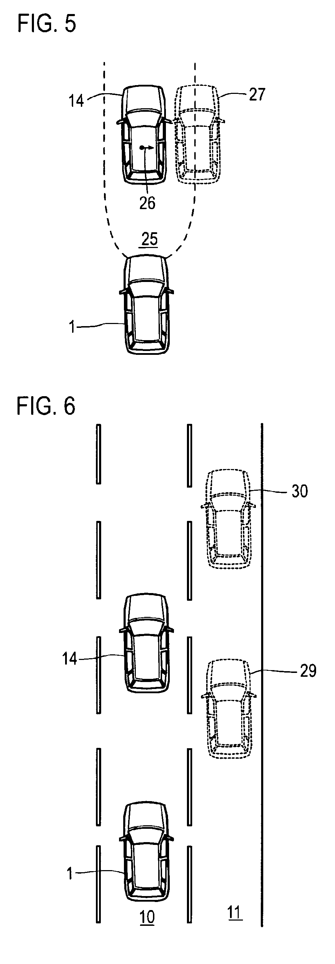

Ein weiterer in diesem Ausführungsbeispiel verwendeter Algorithmus 7 wird in einem Schritt 24 durchgeführt und betrifft die Betrachtung einer ermittelten Quergeschwindigkeit des voranfahrenden Fahrzeugs 14. Dies soll durch Fig. 5 näher dargestellt werden. Darin wird eine wahrscheinlichste Trajektorie in Form eines Fahrschlauchs 25 verwendet, die ein Auswahlkriterium zur Bestimmung des Regelobjekts bildet. Den detektierten Objekten, die sich wenigstens teilweise innerhalb des Fahrschlauchs 25 befinden, wird ein Plausibilitätswert, der eine Wahrscheinlichkeit, dass das Objekt ein Regelobjekt bildet, beschreibt, ermittelt. Diese ohnehin vorhandene Funktionalität wird nun auch zur Ermittlung einer Ausscherwahrscheinlichkeit genutzt. Ersichtlich befindet sich in dem in Fig. 5 dargestellten Fall das voranfahrende Fahrzeug 14 noch vollständig innerhalb des Fahrschlauchs 25. Jedoch weist es eine über die Umfeldsensoren messbare Quergeschwindigkeit, angedeutet durch den Pfeil 26, auf.

Diese ermittelte Quergeschwindigkeit wird nun genutzt, um eine prädizierte Position 27 des Fahrzeugs 14 zu ermitteln, die dieses nach einer vorbestimmten Zeit, beispielsweise einigen Sekunden, eingenommen haben wird. Für diese prädizierte Position 27 wird nun wiederum ein Plausibilitätswert bestimmt. Die Differenz dieses Plausibilitätswertes zu 1 bzw. 100 % kann nun als eine Ausscherwahrscheinlichkeit angesehen werden, wobei im hier vorliegenden Fall diese nur anteilhaft in die Ermittlung der endgültigen Ausscherwahrscheinlichkeit in Schritt 8 eingeht.

In einem Schritt 28 wird als dritter Algorithmus 7 eine Situationsanalyse durchgeführt. Dabei werden wiederum über den Radarsensor 4 und/oder die Kamera 5 - wie dies auch bei der Plausibilisierung des Regelobjekts geschieht - dem Kraftfahrzeug 1 voranfahrende Objekte detektiert und deren Verlauf bzw. die aktuelle Position wird im Hinblick auf eine Ausscherwahrscheinlichkeit bewertet, was im Hinblick auf Fig. 6 näher erläutert werden soll. Ersichtlich nähert sich dabei das Kraftfahrzeug 1 dem voranfahrenden Fahrzeug 14 oder befindet sich bereits im Folgebetrieb bezüglich des Fahrzeugs 14 als Regelobjekt. Weder das eigene Kraftfahrzeug 1 noch das Fahrzeug 14 befinden sich dabei im Rechtsverkehr auf der ganz rechten Spur 11, sondern im vorliegenden Beispiel wiederum auf der Fahrspur 10. Nun gibt es mehrere Situationen, die betrachtet werden können und einen Aufschluss auf die Ausscherwahrscheinlichkeit des Fahrzeugs 14 geben. So ist es zum einen denkbar, dass das Fahrzeug 14 gerade einen weiteren Verkehrsteilnehmer 29 überholt. Dann kann im Rahmen der Situationsanalyse, nachdem ja die Spurzugehörigkeit aus Spurdaten bekannt ist und die Verkehrsteilnehmerdaten der detektierten Objekte, insbesondere die Geschwindigkeit und Position, ebenso bekannt sind, dieser Überholvorgang weiter nachverfolgt werden. Ist beispielsweise ein dem Verkehrsteilnehmer 29 voranfahrender weiterer Verkehrsteilnehmer 30 existent, so ist nicht davon auszugehen, dass das Fahrzeug 14 nach dem Überholvorgang des Verkehrsteilnehmers 29 wieder rechts einscheren wird. Wird hingegen statt dem Verkehrsteilnehmer 30 eine Lücke detektiert, die groß genug ist, dass das Fahrzeug 14 sozusagen "Platz machen" kann, folgt aus der Situationsanalyse nach Beendigung des Überholvorgangs eine Ausscherwahrscheinlichkeit.

Eine derartige Situation ist auch gegeben, wenn weder der Verkehrsteilnehmer 29 noch der Verkehrsteilnehmer 30 vorhanden sind, das Fahrzeug 14 mithin unmotiviert auf der Fahrspur 10 statt auf der Fahrspur 11 fährt.

Diesen Situationen - also der Beendigung eines Überholvorgangs und der erstmaligen Detektion der Situation eines unmotivierten Linksfahrens - ist nun jeweils eine, insbesondere für beide Fälle gleiche, feste Ausscherwahrscheinlichkeit zugeordnet, vorliegend im Beispiel 50 %. Es sei jedoch an dieser Stelle angemerkt, dass die Situationsanalyse selbstverständlich komplexer ausgeführt werden kann und eine Ausscherwahrscheinlichkeit speziell berechnet oder auf sonstige Art und Weise von der speziellen Fahrsituation abhängig bestimmt werden kann. Relevant ist hauptsächlich, dass aufgrund der Sensordaten der Umfeldsensoren Verkehrsteilnehmerdaten und eine Spurzuordnung der detektierten Objekte/Verkehrsteilnehmer und des eigenen Kraftfahrzeugs 1 möglich ist.

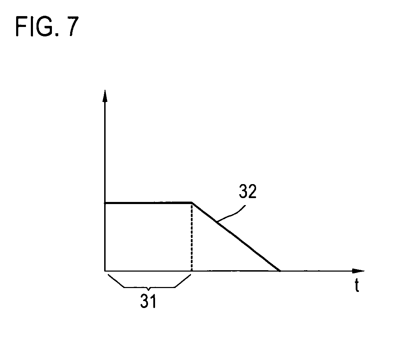

Um den Fall notorischer Linksfahrer oder von voranfahrenden Fahrzeugen, die Lücken nicht nutzen wollen, abzudecken, ist ein zeitlicher Verfall der über die Situationsanalyse ermittelten Ausscherwahrscheinlichkeit vorgesehen. Diese wird in Fig. 7 gegen die Zeit aufgetragen dargestellt. Ersichtlich wird die Ausscherwahrscheinlichkeit über eine vorbestimmte Zeitdauer 31, hier 3 Sekunden, konstant gehalten. Danach wird die Ausscherwahrscheinlichkeit über eine Rampe 32 abgebaut. So werden Fehlreaktionen auf notorische Linksfahrer und dergleichen vermieden.

Wie bereits erwähnt, werden sodann die in den Algorithmen 7 ermittelten Teil-Ausscherwahrscheinlichkeiten bzw. Einzel-Ausscherwahrscheinlichkeiten in einem Schritt 8 zu einer endgültigen Ausscherwahrscheinlichkeit zusammengefasst, anhand der der Betrieb des Fahrerassistenzsystems 2 beeinflusst wird.

So wird in einem Schritt 33, vgl. Fig. 2, überprüft, ob die endgültige Ausscherwahrscheinlichkeit einen Deplausibilisierungsschwellwert überschreitet. Dieser liegt in diesem Ausführungsbeispiel bei 80 %. Ist dies der Fall, so wird das aktuelle Regelobjekt unabhängig von der sonstigen Plausibilisierung in einem Schritt 34 deplausibilisiert, während selbstverständlich gleichzeitig weiter zyklisch die Ausscherwahrscheinlichkeiten neu bestimmt werden, Pfeil 35. Ist die Ausscherwahrscheinlichkeit kleiner als der Deplausibilisierungsschwellwert, wird in einem Schritt 36 nun überprüft, ob die Ausscherwahrscheinlichkeit einen Vorbereitungsschwellwert, der im vorliegenden Beispiel bei 50 % liegt, überschreitet. Ist dies nicht der Fall, beginnt die Ermittlung der Ausscherwahrscheinlichkeit gemäß Pfeil 35 im nächsten Zyklus von vorne. Ist jedoch eine Ausscherwahrscheinlichkeit gegeben, die größer als der Vorbereitungsschwellwert ist, so wird der Folgebetrieb modifiziert, vorliegend indem ein Regelabstand zu dem voranfahrenden Fahrzeug verkleinert wird und zu einer von dem Fahrerassistenzsystem im Folgebetrieb ermittelten Beschleunigungsanforderung ein positiver Beschleunigungswert addiert wird, wobei die Verkleinerung des Regelabstands und der Beschleunigungswert von dem aktuellen Abstand zu dem voranfahrenden Fahrzeug und der Ausscherwahrscheinlichkeit abhängen und derart gewählt werden, dass in keinem Fall eine Kollision auftritt. So kann ein Überholvorgang, der mit dem endgültigen Ausscheren (und damit Deplausibilisieren) des voranfahrenden Fahrzeugs einsetzt, vorbereitet werden und dann schneller und dynamischer durchgeführt werden.

Neben der Deplausibilisierung gemäß Schritt 34 und der Modifizierung des Folgebetriebs gemäß Schritt 37 kann die Ausscherwahrscheinlichkeit auch zur Anpassung der Regelung im Freifahrbetrieb, unmittelbar nach Deplausibilisierung des bisherigen Regelobjekts, verwendet werden, was im unteren Teil von Fig. 2 näher erläutert ist.

Findet eine Deplausibilisierung des aktuellen Regelobjekts statt, sei es aufgrund der Überprüfung in Schritt 33 oder, wie durch den Pfeil 38 angedeutet, aus sonstigen Gründen, so wird in einem Schritt 39 überprüft, ob die Ausscherwahrscheinlichkeit einen Situationsschwellwert überschreitet. Ist dies der Fall, so wird für einen vorbestimmten Zeitraum die Regelung im Freifahrbetrieb in einem Schritt 40 derart verändert, dass ein schnellerer Wechsel auf einen Beschleunigungsbetrieb des Kraftfahrzeugs angefordert wird und die Beschleunigungsanforderung erhöht wird. Das bedeutet, die Gradienten der Beschleunigungsanforderung können größer gewählt werden, und es kann allgemein schneller beschleunigt werden, um einen Überholvorgang für das ehemalige Regelobjekt schnell abschließen zu können.

Dann wird in den normalen Freifahrbetrieb übergegangen, Schritt 41.

Es sei an dieser Stelle noch angemerkt, dass auch eine Vorkonditionierung von anderen Fahrzeugsystemen im Hinblick auf eine bevorstehende und gewollte schnellere Beschleunigung des Kraftfahrzeugs vorgesehen sein kann, insbesondere bei Überschreitung eines Vorkonditionierungsschwellwerts für die Ausscherwahrscheinlichkeit. Danach erfolgt eine entsprechende Anpassung der Betriebsparameter.

## Patentansprüche

1. Verfahren zum Betrieb eines längsführenden Fahrerassistenzsystems (2) eines Kraftfahrzeugs (1), welches in einem reinen Folgebetrieb die Geschwindigkeit des Kraftfahrzeugs (1) so regelt, dass ein Abstand zu einem voranfahrenden Fahrzeug (14) als Regelobjekt konstant bleibt, und welches in einem Freifahrbetrieb auf eine Wunschgeschwindigkeit regelt, wobei eine Ausscherwahrscheinlichkeit des voranfahrenden Fahrzeugs (14) in Abhängigkeit von Sensordaten wenigstens eines Umfeldsensors ermittelt wird, **dadurch gekennzeichnet, dass** die Regelung auf das voranfahrende Fahrzeug (14) und/oder die Regelung im Freifahrbetrieb unmittelbar nach der Beendigung des Folgebetriebs in Abhängigkeit von der Ausscherwahrscheinlichkeit modifiziert wird, indem bei einer einen Vorbereitungsschwellwert überschreitenden Ausscherwahrscheinlichkeit und einer Geschwindigkeit des voranfahrenden Fahrzeugs (14), die niedriger als die Wunschgeschwindigkeit ist, ein Regelabstand zu dem voranfahrenden Fahrzeug (14) verkleinert wird und/oder zu einer von dem Fahrerassistenzsystem (2) im Folgebetrieb ermittelten Beschleunigungsanforderung ein positiver Beschleunigungswert addiert wird, oder in Abhängigkeit von der Ausscherwahrscheinlichkeit der Folgebetrieb beendet wird, wobei bei einer einen Situationsschwellwert überschreitenden Ausscherwahrscheinlichkeit bei Beendigung des Folgebetriebs schneller von Bremse auf Antrieb gewechselt und/oder eine höhere Beschleunigung angefordert wird als bei einer sonstigen Objektdeplausibilisierung.

2. Verfahren nach Anspruch 1, **dadurch gekennzeichnet, dass** bei einer einen Deplausibilisierungsschwellwert überschreitenden Ausscherwahrscheinlichkeit der Folgebetrieb unmittelbar beendet wird.

3. Verfahren nach Anspruch 1 oder 2, **dadurch gekennzeichnet, dass** die Verkleinerung des Regelabstands und/oder der Beschleunigungswert abhängig von dem aktuellen Abstand zu dem voranfahrenden Fahrzeug (14) und/oder der Ausscherwahrscheinlichkeit gewählt wird.

4. Verfahren nach einem der vorangehenden Ansprüche, **dadurch gekennzeichnet, dass** zur Bestimmung der Ausscherwahrscheinlichkeit eine Situationsanalyse durchgeführt wird, insbesondere bezüglich eines Überholvorgangs des voranfahrenden Fahrzeugs (14) und/oder eines ohne eine Motivation auf einer linken Fahrspur (10) bei Rechtsverkehr oder einer rechten Fahrspur bei Linksverkehr voranfahrenden Fahrzeugs (14).

5. Verfahren nach Anspruch 4, **dadurch gekennzeichnet, dass** für die Situationsanalyse Spurdaten über die aktuell von dem Kraftfahrzeug (1) befahrene Fahrspur (10) und die Gesamtzahl von Fahrspuren (10, 11) der befahrenen Straße und/oder Verkehrsteilnehmerdaten, insbesondere eine Fahrspur (10, 11) und/oder eine Geschwindigkeit und/oder eine Position, bezüglich weiterer voranfahrender Verkehrsteilnehmer (29, 30) ermittelt werden.

6. Verfahren nach Anspruch 4 oder 5, **dadurch gekennzeichnet, dass** die Ausscherwahrscheinlichkeit erhöht und/oder auf einen festen Wert hochgesetzt wird, wenn die Situationsanalyse insbesondere durch Betrachtung eines Verlaufes der Position des voranfahrenden Fahrzeugs (14) und wenigstens eines weiteren, überholten oder zu überholenden Verkehrsteilnehmers (29, 30), ergibt, dass das voranfahrende Fahrzeug (14) den Überholvorgang abgeschlossen hat und bei Rechtsverkehr auf die rechte Fahrspur (11) einscheren kann oder bei Linksverkehr auf die linke Fahrspur einscheren kann, und/oder wenn die Situationsanalyse ergibt, dass das voranfahrende Fahrzeug (14) trotz einer leeren rechten Fahrspur (11) bei Rechtsverkehr oder einer leeren linken Fahrspur bei Linksverkehr auf der Fahrspur (10) des Kraftfahrzeugs (1) fährt.

7. Verfahren nach Anspruch 6, **dadurch gekennzeichnet, dass** bei einem trotz einer leeren rechten Fahrspur (11) bei Rechtsverkehr oder einer leeren linken Fahrspur bei Linksverkehr auf der Fahrspur (10) des Kraftfahrzeugs (1) fahrend detektierten voranfahrenden Fahrzeug (14) die Erhöhung oder Hochsetzung der Ausscherwahrscheinlichkeit nur für eine vorbestimmte Zeitspanne (31), insbesondere 2 bis 4 Sekunden, erfolgt und dann, insbesondere über eine Rampe (32), abgebaut wird.

8. Verfahren nach einem der vorangehenden Ansprüche, **dadurch gekennzeichnet, dass** die Ausscherwahrscheinlichkeit unter Berücksichtigung einer Überdeckung zwischen der befahrenen Fahrspur (10) und dem voranfahrenden Fahrzeug (14) bestimmt wird.

9. Verfahren nach Anspruch 8, **dadurch gekennzeichnet, dass** zur Ermittlung der Überdeckung die Winkel (17, 19) von einem das Objekt vermessenden Sensor zu den beiden hinteren äußeren Kanten (15, 16) des voranfahrenden Fahrzeugs (14) mit dem Winkel (20) zu einer insbesondere in einem Bild einer Kamera (5) in einem dem Abstand der Kanten (15, 16) entsprechenden Abstand befindlichen Fahrspurmarkierung (13) verglichen werden.

10. Verfahren nach Anspruch 8 oder 9, **dadurch gekennzeichnet, dass** die Abbildung der Überdeckung auf die Ausscherwahrscheinlichkeit und/oder eine Erhöhung der Ausscherwahrscheinlichkeit wenigstens teilweise linear verläuft, wobei die Ausscherwahrscheinlichkeit mit abnehmender Überdeckung ansteigt.

11. Verfahren nach einem der vorangehenden Ansprüche, **dadurch gekennzeichnet, dass** eine Quergeschwindigkeit des voranfahrenden Fahrzeugs (14) gemessen wird, woraus eine Position (27), insbesondere Querposition (27), des voranfahrenden Fahrzeugs (14) nach einer vorbestimmten Zeitdauer, insbesondere 2 bis 4 Sekunden, prädiziert wird und die Ausscherwahrscheinlichkeit unter Berücksichtigung der prädizierten Position (27) ermittelt wird.

12. Verfahren nach Anspruch 11, **dadurch gekennzeichnet, dass** zur Ermittlung des Regelobjekts ein Plausibilitätswert für ein detektiertes vorausfahrendes Objekt anhand eines Fahrschlauchs (25) bestimmt wird, wobei die Ausscherwahrscheinlichkeit unter Berücksichtigung eines Plausibilitätswertes bezüglich der prädizierten Position (27) bestimmt wird, insbesondere bei einem eine Wahrscheinlichkeit angebenden Plausibilitätswert als Eins minus den Plausibilitätswert.

13. Kraftfahrzeug (1), umfassend ein längsführendes Fahrerassistenzsystem (2) mit einer zur Durchführung eines Verfahrens nach einem der vorangehenden Ansprüche ausgebildeten Steuereinrichtung (3).

## Claims

1. Method for operating a longitudinal driver assistance system (2) of a motor vehicle (1) which controls the speed of the motor vehicle (1) in a purely follow mode such that a distance from a preceding vehicle (14) representing a control object remains constant, and which controls the speed of the motor vehicle in a free-driving mode at a desired speed, a probability of the preceding vehicle (14) pulling out being determined on the basis of sensor data from at least one environment sensor, **characterised in that**
the control in relation to the preceding vehicle (14) and/or the control in the free-driving mode is modified immediately upon termination of the follow mode depending on the pulling-out probability, whereby, in the event that a pulling-out probability exceeds a preparation threshold value and in the event that a speed of the preceding vehicle (14) is slower than the desired speed, a control distance from the preceding vehicle (14) is reduced and/or a positive acceleration value is added to an acceleration request determined by the driver assistance system (2) in the follow mode, or the follow mode is terminated depending on the pulling-out probability, changing from braking to driving being quicker and/or greater acceleration being requested when a pulling-out probability exceeds a situation threshold value upon termination of the follow mode than in the event of another object deplausibility check.

2. Method according to claim 1, **characterised in that** the follow mode is immediately terminated when a pulling-out probability exceeds a deplausibility check threshold value.

3. Method according to either claim 1 or claim 2, **characterised in that** the reduction in the control distance and/or the acceleration value is selected depending on the current distance from the preceding vehicle (14) and/or the pulling-out probability

4. Method according to any of the preceding claims, **characterised in that**, in order to determine the pulling-out probability, a situation analysis is carried out, in particular in relation to an overtaking manoeuvre by the preceding vehicle (14) and/or in relation to a preceding vehicle (14) travelling in a left-hand lane (10) in the case of right-hand traffic or in a right-hand lane in the case of left-hand traffic, without reason.

5. Method according to claim 4, **characterised in that** lane data regarding the lane (10) in which the motor vehicle (1) is currently travelling and the total number of lanes (10, 11) on the road being travelled and/or road user data, in particular a lane (10, 11) and/or a speed and/or a position with regard to additional preceding road users (29, 30) is determined for the situation analysis.

6. Method according to either claim 4 or claim 5, **characterised in that** the pulling-out probability is increased and/or raised to a fixed value when the situation analysis indicates, in particular by considering a course of the position of the preceding vehicle (14) and of at least one additional road user (29, 30) who has been overtaken or is to be overtaken, that the preceding vehicle (14) has completed the overtaking manoeuvre and is able to pull in to the right-hand lane (11) for right-hand traffic or is able to pull in to the left-hand lane for left-hand traffic, and/or when the situation analysis indicates that the preceding vehicle (14) is travelling in the lane (10) of the motor vehicle (1) despite a right-hand lane (11) being empty in the case of right-hand traffic or a left-hand lane being empty in the case of left-hand traffic.

7. Method according to claim 6, **characterised in that**, if a preceding vehicle (14) is detected as travelling in the lane (10) of the motor vehicle (1) despite a right-hand lane (11) being empty in the case of right-hand traffic or a left-hand lane being empty in the case of left-hand traffic, the pulling-out probability is increased or raised only for a predetermined period of time (31), in particular of from 2 to 4 seconds, and is thereafter reduced, in particular by a ramp (32).

8. Method according to any of the preceding claims, **characterised in that** the pulling-out probability is determined by taking into consideration an overlap between the occupied lane (10) and the preceding vehicle (14).

9. Method according to claim 8, **characterised in that**, in order to determine the overlap, the angles (17, 19) from a sensor measuring the object to the two rear outer edges (15, 16) of the preceding vehicle (14) are compared with the angle (20) to a lane marking (13), in particular in an image of a camera (5), which is at a distance which corresponds to the distance of the edges (15, 16).

10. Method according to either claim 8 or claim 9, **characterised in that** the image of the overlap extends linearly at least in part towards the pulling-out probability and/or an increase in the pulling-out probability, the pulling-out probability increasing as the overlap decreases.

11. Method according to any of the preceding claims, **characterised in that** a transverse speed of the preceding vehicle (14) is measured, from which a position (27), in particular a transverse position (27), of the preceding vehicle (14) is predicted after a predetermined period of time, in particular of from 2 to 4 seconds, and the pulling-out probability is determined by taking into account the predicted position (27).

12. Method according to claim 11, **characterised in that** a plausibility value for a detected preceding object is determined based on a driving trajectory (25) in order to determine the control object, the pulling-out probability being determined taking into account a plausibility value with regard to the predicted position (27), in particular in the case of a plausibility value specifying a probability being one minus the plausibility value.

13. Motor vehicle (1) comprising a longitudinal driver assistance system (2) which has a control device (3) designed to carry out a method according to any of the preceding claims.

## Revendications

1. Procédé servant à faire fonctionner un système d'aide à la conduite (2) longitudinale d'un véhicule automobile (1), lequel régule la vitesse du véhicule automobile (1) lorsque ce dernier suit un autre véhicule tout simplement de telle manière qu'une distance par rapport à un véhicule précédent (14) reste constante en tant qu'objet de régulation et qui régule la vitesse sur une vitesse souhaitée lorsque la voie est libre, où la probabilité de déboîtement du véhicule précédent (14) est déterminée en fonction des données de capteur d'au moins un capteur d'environnement, **caractérisé en ce que** la régulation sur le véhicule qui précède (14) et/ou la régulation lorsque la voie est libre sont modifiées directement lorsque le véhicule automobile cesse de suivre un autre véhicule en fonction de la probabilité de déboîtement **en ce qu'**une distance de régulation par rapport au véhicule qui précède (14) est réduite lorsque la probabilité de déboîtement dépasse une valeur seuil de préparation et lorsque la vitesse du véhicule qui précède (14) est inférieure à la vitesse souhaitée, et/ou **en ce qu'**une valeur positive d'accélération est ajoutée à un besoin d'accélération déterminé par le système d'aide à la conduite (2) lorsque le véhicule automobile suit un autre véhicule, ou **en ce que** le véhicule automobile cesse de suivre un véhicule en fonction de la probabilité de déboîtement, où l'on passe plus rapidement du ralentissement à la propulsion lorsque le véhicule automobile cesse de suivre un autre véhicule lorsque la probabilité de déboîtement dépasse une valeur seuil de situation et/ou où une accélération plus importante est requise que dans le cas de l'absence de toute plausibilité liée à un objet.

2. Procédé selon la revendication 1, **caractérisé en ce que** le véhicule automobile cesse immédiatement de suivre un autre véhicule lorsque la probabilité de déboîtement dépasse une valeur seuil relative à une absence de plausibilité.

3. Procédé selon la revendication 1 ou 2, **caractérisé en ce que** la diminution de la distance de régulation et/ou la valeur d'accélération sont choisies en fonction de la distance du moment par rapport au véhicule qui précède (14) et/ou par rapport à la probabilité de déboîtement.

4. Procédé selon l'une quelconque des revendications précédentes, **caractérisé en ce qu'**une analyse de situation est effectuée afin de déterminer la probabilité de déboîtement, en particulier par rapport à une opération de dépassement du véhicule qui précède (14) et/ou par rapport à un véhicule qui précède (14) sans intention de se déporter sur une voie de circulation de gauche (10) en cas de circulation à droite ou sans intention de se déporter sur une voie de circulation de droite en cas de circulation à gauche.

5. Procédé selon la revendication 4, **caractérisé en ce que**, en vue de l'analyse de situation, sont déterminés des données de voie concernant la voie de circulation (10) empruntée pour le moment par le véhicule automobile (1) et le nombre total de voies de circulation (10, 11) de la route empruntée et/ou des données des usagers de la route, en particulier une voie de circulation (10, 11) et/ou une vitesse et/ou une position par rapport à d'autres usagers de la route qui précèdent (29, 30).

6. Procédé selon la revendication 4 ou 5, **caractérisé en ce que** la probabilité de déboîtement est augmentée et/ou est augmentée de manière à s'établir à une valeur fixe lorsqu'il ressort de l'analyse de situation en particulier en observant l'évolution de la position du véhicule qui précède (14) et au moins un autre usager de la route (29, 30) dépassé ou dépassant que le véhicule qui précède (14) a terminé l'opération de dépassement et peut se rabattre sur la voie de circulation de droite (11) en cas de circulation à droite ou sur la voie de circulation de gauche en cas de circulation à gauche, et/ou lorsqu'il ressort de l'analyse de situation que le véhicule qui précède (14) circule sur la voie de circulation (10) du véhicule automobile (1) en dépit d'une voie de circulation de droite vide (11) en cas de circulation à droite ou en dépit d'une voie de circulation de gauche vide en cas de circulation à gauche.

7. Procédé selon la revendication 6, **caractérisé en ce que** l'augmentation de la probabilité de déboîtement n'a lieu que sur un laps de temps (31) prédéfini, en particulier pendant 2 à 4 secondes, lorsque le véhicule qui précède (14) détecté circule sur la voie de circulation (10) du véhicule automobile (1) en dépit d'une voie de circulation de droite vide (11) en cas de circulation à droite ou en dépit d'une voie de circulation de gauche vide en cas de circulation à gauche, puis **en ce que** ladite augmentation est supprimée, en particulier sur une rampe (32).

8. Procédé selon l'une quelconque des revendications précédentes, **caractérisé en ce que** la probabilité de déboîtement est déterminée en tenant compte d'un chevauchement entre la voie de circulation (10) empruntée et le véhicule qui précède (14).

9. Procédé selon la revendication 8, **caractérisé en ce qu'**afin de déterminer le chevauchement, les angles (17, 19) d'un capteur mesurant l'objet par rapport aux deux bords arrière extérieurs (15, 16) du véhicule qui précède (14) sont comparés à l'angle (20) par rapport à un marquage de voie de circulation (13) se trouvant, en particulier sur une prise de vue d'une caméra (5), à une distance correspondant à la distance des bords (15, 16).

10. Procédé selon la revendication 8 ou 9, **caractérisé en ce que** la représentation du chevauchement s'étend au moins en partie de manière linéaire sur la probabilité de déboîtement et/ou sur une augmentation de la probabilité de déboîtement, où la probabilité de déboîtement augmente au fur et à mesure que le chevauchement diminue.

11. Procédé selon l'une quelconque des revendications précédentes, **caractérisé en ce qu'**une vitesse transversale du véhicule qui précède (14) est mesurée, à partir de laquelle une position (27), en particulier une position transversale (27), du véhicule qui précède (14) peut être prévue après un laps de temps prédéfini, en particulier de 2 à 4 secondes, et **en ce que** la probabilité de déboîtement est déterminée en tenant compte de la position (27) prévisible.

12. Procédé selon la revendication 11, **caractérisé en ce qu'**afin de déterminer l'objet de régulation, une valeur de plausibilité est déterminée pour un objet précédent détecté à l'aide d'une trajectoire (25), où la probabilité de déboîtement est déterminée en tenant compte d'une valeur de plausibilité par rapport à la position (27) prévisible, en particulier pour une valeur de plausibilité indiquant une probabilité de un moins la valeur de plausibilité.

13. Véhicule automobile (1), comprenant un système d'aide à la conduite (2) longitudinale, comprenant un système de commande (3) réalisé aux fins de la mise en oeuvre d'un procédé selon l'une quelconque des revendications précédentes.
